# EUROPEAN PATENT APPLICATION

(11) **EP 2 945 106 A1**
(43) Date of publication of application: **18.11.2015**
(21) Application number: 15167700.2
(22) Date of filing: 13.05.2015
(51) Int. Cl.: G06Q 10/08, G06K 7/10

(54) **STORAGE SYSTEM AND REFILL ORDER FULFILMENT PROCESS**

(30) Priority: 14.05.2014 FI 20145438
(71) Applicant: LVI-WaBek Oy, 02920 Espoo (FI)
(72) Inventor: Pelkonen, Kimmo, 02920 Espoo (FI); Pelkonen, Mari-Jaana, 02920 Espoo (FI)
(74) Representative: Seppo Laine Oy

(57) **Abstract**

Storage system, which comprises storage spaces (1A, 1B, ...) for storing various products, and markings (2A, 2B, ...) depicting the extent of filling in the storage spaces. The storage system comprises identifiers (5A, 5B, ..., 12, 13, 14), e.g., NFC tags or QR codes, which contain data for placing refill orders from an electronic trading service with the aid of the terminal device, e.g., a mobile phone. At least some of the remotely-readable identifiers are each logically connected to one marking depicting the extent of filling, in such a way that the default-order amount corresponding to the marking depicting the extent of filling can be derived in the electronic trading service on the basis of code contained in the identifier.

## Description

The invention relates to a storage system, for example, a box, a chest of drawers, a shelf, a set of cabinets, a warehouse shelf, or similar, in which goods and materials are stored, and which are used, and thus more of which must be ordered at some stage.

The invention also relates to an ordering method for making refill orders for such a storage system.

### Background

Several different storage systems are known, as are smart-shelf system, which are connected to a materials-management system for performing automatic refill orders.

The known automatic systems are, however, very expensive and thus are not really suitable, for example, for small or mobile entities.

Traditional warehouse shelves and chests of drawers, which are not integrated in the goods-suppliers' ordering systems, are cheap but leave much to be desired in relation to the placing of refill orders, as they provide no automation for placing orders.

### Summary of the invention

The invention is intended to create a technical solution, which makes possible a cheap storage system, which is nevertheless able to facilitate the placing of refill orders through an electronic trading service, for example, through a webstore.

The invention is based on the storage spaces of the storage system being equipped with markings depicting the extent to which they are full and identifiers being connected to the storage system, which identifies are remotely readable with the aid of a terminal device and contain information for placing orders corresponding to the extent-of-filling markings from the electronic trading service with the aid of the terminal device.

More specifically, the storage system according to the invention is characterized by what is stated in the characterizing portion of Claim 1.

The ordering methods according to the invention are defined in Claims 13 and 14.

Considerable advantages are achieved with the aid of the invention. This is because, with the aid of the invention, the placing of a refill order in a webstore or other electronic trading system can be facilitated with the aid of a cheap system. The invention also has embodiments, which permit easy and rapid ordering also by means of a mobile station.

### Brief description of the drawings

In the following, the invention is examined with the aid of examples and with reference to the accompanying drawings.
Figure 1 shows a storage system according to one embodiment;
Figure 2 shows a storage system according to a second embodiment;
Figure 3 shows a storage system according to a third embodiment;
Figure 4 shows a storage system according to a fourth embodiment;
Figure 5 shows an arrangement according to one embodiment for connecting a storage system to a webstore service;
Figure 6 shows the implementation of a refill order according to one embodiment; and
Figure 7 shows a user interface according to one embodiment, through which a refill order can be placed in a webstore connected to the storage system.

### Embodiments

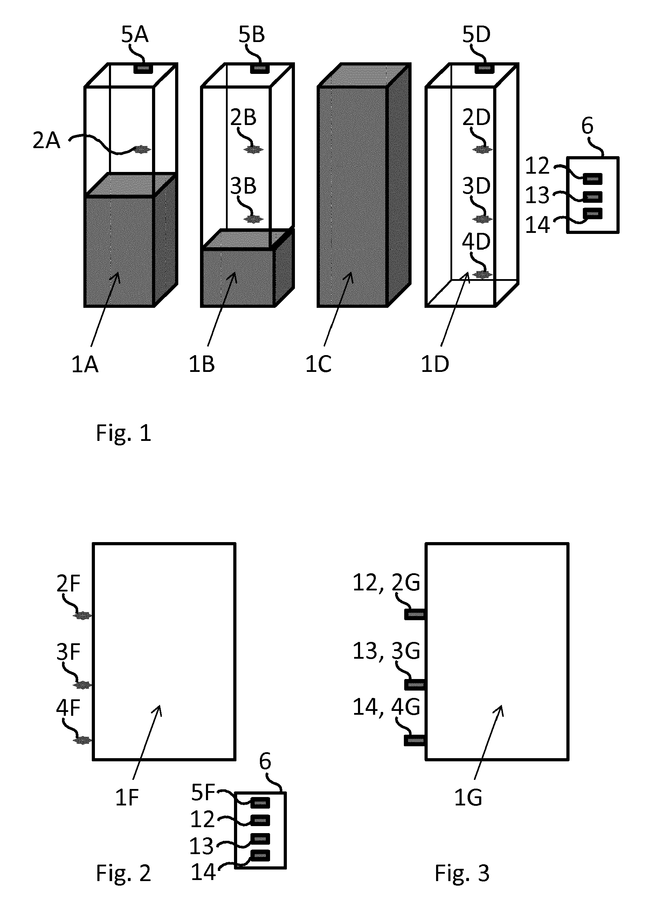

Figure 1 shows a storage system according to one embodiment, which comprises storage spaces 1A, 1B, 1C, 1D for storing various products A, B, C, D (the shaded portion depicts the product). The number of storage spaces 1A, 1B, 1C, 1D is not limited and can be, for example, 2 - 10. In the example of the figure, there are four storage spaces 1A, 1B, 1C, 1D and a different product A, B, C, D is stored in each space. However, several storage spaces can be reserved for storage a single product, so that each storage space 1A, 1B, 1C, 1D does not need to have its own separate product.

In the storage spaces 1A, 1B, 1C, 1D according to Figure 1 there are markings 2A, 2B, 2D, 3B, 3D, 4D depicting the degree of filling. In the embodiment of Figure 1, the markings are located inside the storage spaces 1A, 1B, 1C, 1D in such a way that, when the storage space is full (as in the storage space 1C in Figure 1), no marking is visible. When the amount of the product being stored in the storage space diminishes and the surface thus drops, the markings become visible. In the example of Figure 1, the amount of product in the storage space 1A has dropped below the first marking 2A, so that the revealed marking 2A is seen by looking at the storage space 1A. It is then possible to place a refill order according to the refill-order amount estimated on the basis of the marking 2A. Correspondingly, in the example of Figure 1 a second marking 3B is visible in the storage space 1B and also the lowest marking 4D in the completely emptied storage space 1D. In the system, each such marking can be set to correspond to the default order amount of its own for a refill order. If the product is piece goods, the default order amount is generally defined product-specifically. If the amount of the product is stated in volume units, the default order amount need not necessarily be selected product-specifically.

The default order amount corresponding to the marking depicting each degree of filling can be defined, for example, in such a way that the amount to be ordered corresponds to that portion of the volume of the storage space between the marking and the storage space. For example, in the case of Figure 1, the marking 2B in the storage space 1B would correspond to a default order amount, the amount of the product B stated by which fills the volume between the marking 2B and the upper edge of the storage space 1B. Correspondingly, the marking 3B would correspond to a default order amount, the amount of the product B stated by which fills the volume between the marking 3B and the upper edge of the storage space 1B. Another alternative is to use as the default order amount the number or volume, in which an optional addition, which is intended to correspond to the consumption taking place between the moment of ordering and the moment of delivery, is added to the amount calculated on the basis of the volume between the marking and the upper edge of the storage space. Default order amounts can also be selected in the same way for products A, C, and D.

In the example of Figure 1, there are three markings depicting the extent of filling in each storage space. However, the system can be designed in such a way that there are not markings in all the storage spaces. There can also be a different number of markings in the different storage spaces. Thus, in one storage space there can be, for example, 0, 1, 2, 3, 4, or more than 4 markings.

In the example of Figure 1, the markings 2A, 2B, 2D, 3B, 3D, 4D depicting the extent of filling are located inside the storage spaces 1A, 1B, 1C, 1D, but it is also possible to locate the markings outside the storage spaces 1A, 1B, 1C, 1D.

The storage system of Figure 1 also comprises identifiers remotely readable with the aid of a terminal device, which contain data for the placing of refill orders from an electronic trading service with the aid of the terminal device. In the embodiment of Figure 1, such identifiers are of two different types: product identifiers and order-amount identifiers. In the example of Figure 1, the identifiers 5A, 5B, and 5D of the product identifiers are visible and are located in the upper parts of the storage spaces 1A, 1B, and 1D of the corresponding products A, B, and D. The product code can be read from the product identifier by means of remote-reading technology with the aid of a terminal device, so that an order can be placed without entering the product code manually in the service. In the embodiment of Figure 1, the system also comprises order-amount identifiers (identifiers 12, 13, and 14), which in this embodiment are located on a separate product card 6 or in a table. Of the order-amount identifiers, the identifier 12 corresponds to the markings 2A, 2B, 2C, and 2D, the identifier 13 corresponds to the markings 3A, 3B, 3C, and 3D, and the identifier 14 corresponds to the markings 4A, 4B, 4C, and 4D.

The terminal device in the embodiment can be, for example, a mobile telephone or other mobile station, and the identifier technology can be based on, for example, NFC (Near Field Communication) technology. Trading services and the ordering system that are usable in connection with these technologies are described in greater detail hereinafter.

Described on a general level, the embodiment of Figure 1 permits an ordering event to be implemented as follows:
- The terminal device is used to read the identifier 5A, whereby the terminal device's application and/or the trading service receives the product code coded in the identifier 5A and identifies the product A being ordered.
- The terminal device is used to read the identifier 12, whereby the terminal device's application and/or the trading service receive the default order amount coded in the identifier 12.
- A default order is created on the basis of the product information read from the identifier 5A and the degree of filling read from the identifier 12 according to the defined default order amount.
- The default order is shown on the terminal device's display for approval by the user.
- The user approves or cancels the default order or changes the order amount of the default order.
- After this, the user optionally repeats the steps described above in order to order the products B and D.
- Finally the user confirms the order and exits the service.

Thus, in the embodiment of Figure 1, at least some of the remotely-readable identifiers are each logically connected to one marking depicting the degree of filling, in such a way that a refill-order amount selected on the basis of the extent of filling corresponding to the marking is coded in the data contained in the identifier. Alternatively, the refill-order amount can be derived from the data contained in the identifier in an electronic trading service, such as a webstore. This can be implemented, for example, in such a way that storage-space-specific identifier information is coded in the identifier and the webstore derives the assumed refill-order amount on the basis of the identifier information.

Figure 2 shows an embodiment, in which the product identifier is also located on the product card 6. In figure 2, only one storage space 1F for the product F is shown from the system. This storage space 1F can be, for example, a warehouse shelf or shelf space, on which products are stacked on top of each other for storage. There can, of course, be several of these warehouse shelves or shelf spaces in the whole system. The embodiment of Figure 2 is also suitable for use in connection with other kinds of storage space.

In the embodiment of the figure, the markings 2F, 3F, 4F depicting the extent of filling are attached next to the shelf space acting as a storage space 1F and the identifiers 5A, 12, 13, 14 are located on a separate product card 6. The identifier 5A acts as a product identifier and the identifiers 12, 13, 14 act as order-amount identifiers corresponding to the markings 2F, 3F, 4F.

Figure 3 shows an embodiment, in which the identifiers 12, 13, 14 also act at the same time as markings 2G, 3G, 4G depicting the extent of filling. The product identifier is also located in connection with the identifiers 12, 13, 14, so that in the embodiment there is not a separate product identifier, instead the product code is read from the identifiers 12, 13, 14. Of course it is possible that, in the embodiment of Figure 3, a separate product identifier (5G, not shown) is attached to the storage space, or the product identifier is read from the product card (6, not shown). In Figure 3, only one storage space 1 G for a product G is shown from the system. This storage space 1 G can be, for example, a warehouse shelf or a shelf space, on which the products are stacked on top of each other for storage. There can, of course, be several of these warehouse shelves or shelf spaces in the whole system. The embodiment of Figure 3 is also suitable for use in connection with other kinds of storage spaces.

The embodiments of Figures 2 and 3 can be used in the same way as depicted in connection with the description of Figure 1. On the basis of Figures 1 - 3, it can be seen that the features described in the various embodiments can be combined suitably for each application.

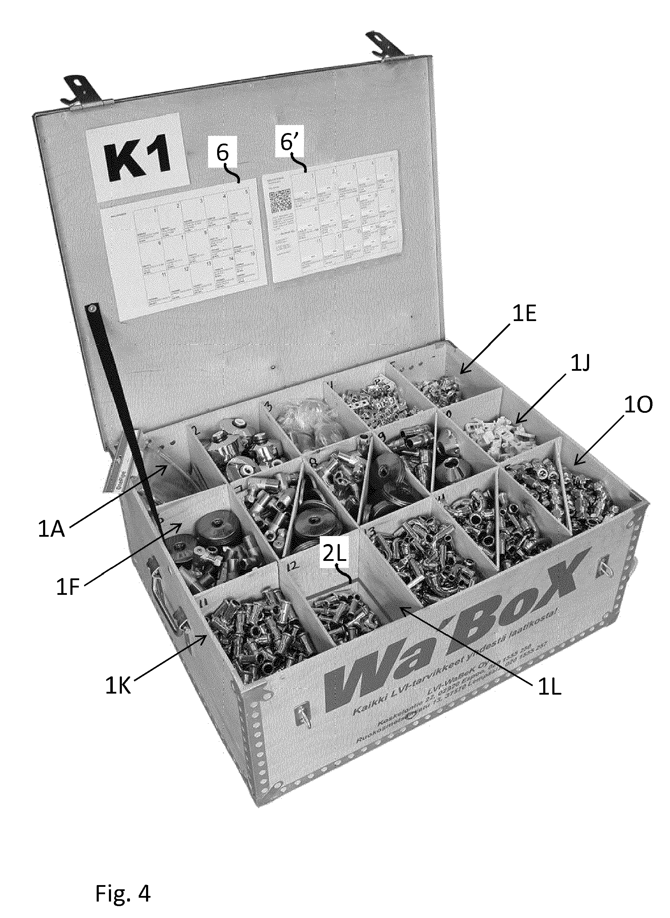

Figure 4 shows a storage system according to yet another embodiment. In this embodiment, the storage system is a box of accessories, which comprises storage spaces 1A, 1B ... 1N, 1O for storing products A ... O. A marking 2L depicting the extent of filling of product L made of the inner surface of the storage space 1L can also be seen in Figure 4. Corresponding marking are also in at least some of the other storage spaces, but they cannot be seen in the situation shown in Figure 4, because there is a great number of products in the storage spaces. In the embodiment of Figure 4, the product card 6 is located in two separate parts of the inner surface of the lid of the accessory box. The product cards 6 can be implemented, for example, by attaching to the inner surface of the lid of the accessory box cards, the visible surface of which is manufactured from paper, board, or cardboard, on the rear surface of which (i.e. between the paper or similar and the lid) are NFC identifiers at locations shown by texts and markings made on the front surface, for example, by outputting or printing.

The embodiment of Figure 4 can be implemented, for example, in such a way that the product card 6 is intended to be used when the marking 2L or another marking 2 (not shown) corresponding to the product is visible. The product card 6' can, on the other hand, be intended to be used when the storage space is empty or nearly empty. A refill order for the products can then be placed according to the main principles described already above in connection with embodiment 1. The embodiment of Figure 4 can thus be used, for example, in such a way that the additional-order amount corresponding to the markings 2 is half of the amount that products corresponding to would fit in the corresponding storage space. This order can be placed by using the terminal device to read the corresponding identifier from the box on the product card 6 showing the product in question. If, on the other hand, the product has run out, or has nearly run out, and it is wished to order an amount of the product corresponding to the volume of the entire storage space, the identifier corresponding to the product is read from the box of the product in question shown on the product card 6'.

The embodiments provide practical solutions for placing orders also by means of mobile stations, in such a way that all the details of the order, such as product codes or order amounts, need not necessarily be entered manually when placing the order.

The term a remotely-readable identifier refers to an identifier, the code contained in which can be read without making contact. The reading distance can be, for example, 0 - 50 cm. Because, in the embodiments, it is often preferable to locate the identifiers close to one another, a remote-reading technology with a shorter reading distance is generally used. The reading distance can be, for example, 0 - 20 cm, less than 10 cm, or less than 5 cm. One remote-reading technology that is very suitable for the purpose is so-called NFC (Near Field Communication) technology. NFC technology is very suitable for data transfer over short distances. NFC technology is a standardized technology and is widely available. A mobile station equipped with NFC technology and an internet connection is, in terms of many embodiments a particularly suitable terminal device for reading identifiers. Another technology very suitable for the purpose is QR code. QR code is a two-dimensional pattern code, which can be read by utilizing the camera of a mobile station.

The embodiments are very suitable for use in connection with many kinds of trading services, for example, webstores. Advantages are achieved, if the identifier is equipped with a code, which provides the necessary additional information for entering the data of an order to the webstore.

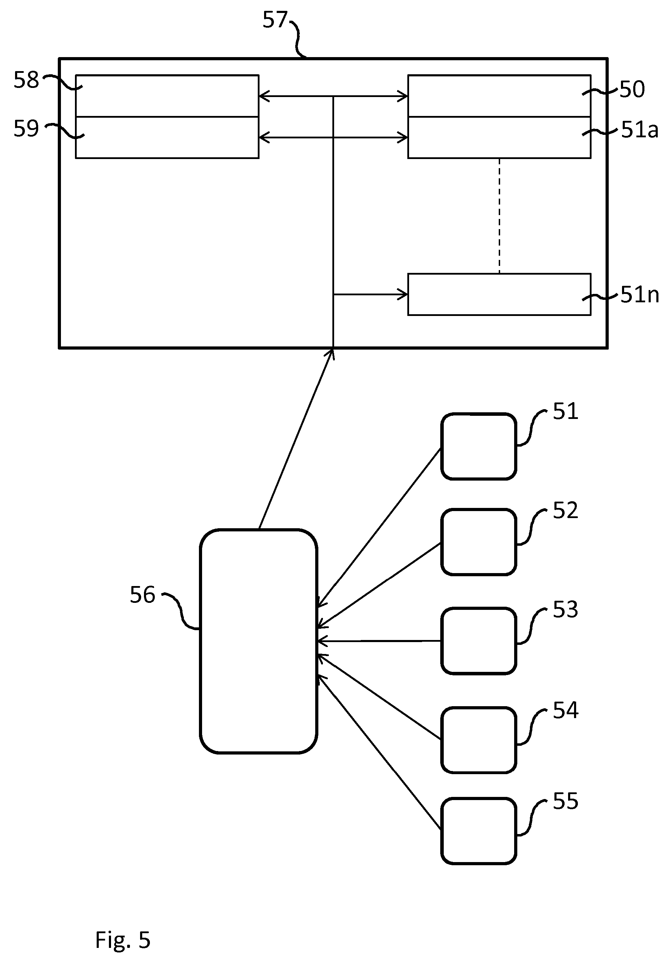

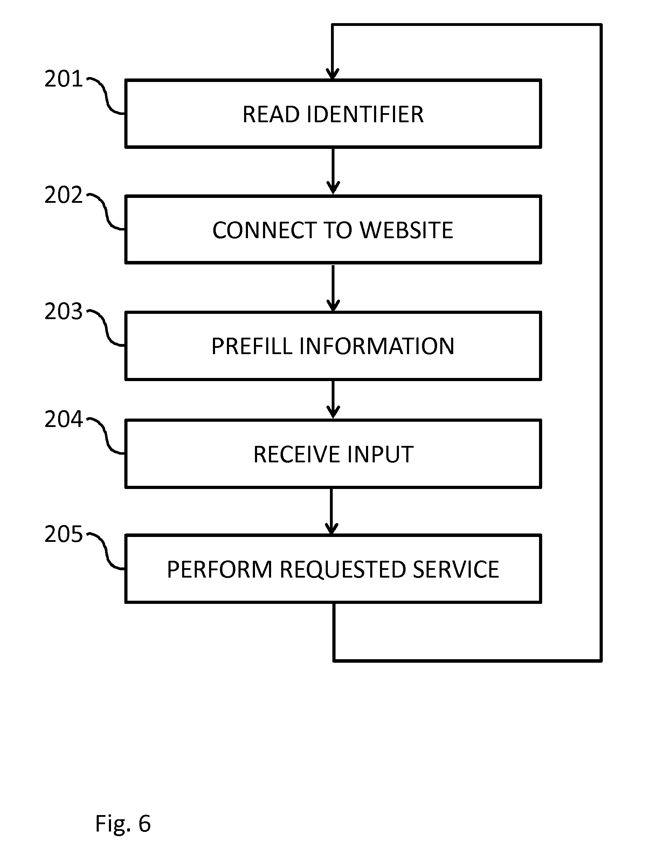

The embodiments are particularly suitable for use in connection with the webstore disclosed in Finnish patent application FI 20145247. In the following, the main features of such a webstore are described with reference to Figures 5 and 6.

In one embodiment shown in Figure 5, an ordering system is implemented for a webstore 57 in such a way that the ordering system comprises a first remotely-readable identifier 51 and at least one second remotely-readable identifier 52, 53, 54. The first remotely-readable identifier 51 comprises a first code, which is arranged to direct the browser program to connect to the webstore 57 for the placing of a first order. Correspondingly, the second remotely-readable identifier 52, 53, 54 comprises a corresponding second code, which differs from the first code and is arranged to direct the browser program to connect to with the webstore 57 for placing at least one second order differing from the first order. In this way, an ordering system can be implemented, in which by reading the first code a move is automatically made to the website of the webstore, in such a way that the first order is already preliminarily prepared. Correspondingly, by reading the second code a move is automatically made to the website of the webstore, in such a way that the second order is already preliminarily prepared.

A desired number of various such prepared orders can be programmed into the ordering system and a code corresponding to each prepared order is recorded against the identifier 51, 52, 53, 54. For their part, the identifiers can be located in suitable places, in which a customer typically places a preliminarily prepared type order. Readable data on the type of preliminarily prepared order corresponding to the identifier can also be located in connection with the identifiers. The embodiment of Figure 5 differs essentially from such known solutions, in which a remotely-readable identifier directs the application only to the webstore's home page 58.

Preliminary preparation can, for example, concern the fact that the product being ordered in the preliminarily prepared order is selected automatically on the basis of the code contained in the identifier, in which case the user of the webstore need not separately select the product or enter a product code.

Preliminary preparation can also, for example, concern the fact that in a preliminarily prepared order the number of items to be ordered is also selected automatically on the basis of the code contained in the identifier, so that that user of the webstore need not separately select the product or also the number of items to be ordered, if the preselected number items meets the customer's wishes.

Preliminary preparation can also concern the fact that in a preliminarily prepared order individuation data on the person placing the order, billing data, and/or the delivery address for the order are selected automatically on the basis of the code contained in the identifier.

According to the embodiment of Figure 5, there is a product-specific ordering page 50, 51a...51n in the webstore 57 for ordering each different product and each product-specific ordering page has its own network address. In such an embodiment, a first code can be arranged to direct the browser program to the ordering page 50 of a first product, utilizing the network address of the ordering page. Correspondingly, each second code can be arranged to direct the browser program to the ordering page 51a...51n of a second product differing from the first product, utilizing the network address of the ordering page of the second product.

In an alternative embodiment, the ordering pages 50, 51a...51n of the webstore 57 are product-group-specific. In this case, to order a product, the browser program is initially directed to the product-group-specific webpage containing this product. In this embodiment, each product-group-specific ordering page has its own network address. It is also possible for some of the ordering pages 50, 51a...51n of the webstore to be product-group-specific ordering pages and some product-specific ordering pages.

In one embodiment, the first code is arranged to direct the browser program to the ordering page 50 of a first product, utilizing the network address of the ordering page, and to pre-complete a first order amount on the ordering page. Further, at least one second code can be arranged to direct the browser program to the ordering page 50 of a first product, utilizing the network address of the ordering page, and to pre-complete on the ordering page a second order amount differing from the first order amount.

According to one embodiment, the remotely readable identifier is an NFC identifier or a QR code. Later in this document the remotely readable identifier is also referred to as a tag. Such an identifier can be situated on, for example, a sticker, which is glued in a suitable place for placing orders. If wished, one such sticker can also be equipped with more than one identifier.

In one embodiment, the ordering system comprises at least a third remotely readable identifier 55, which comprises a third code, which is arranged to direct the browser program to the webstore's login page 59. Such a third code can, for its part, contain a login identifier, in such a way that the code is arranged to add the login identifier to the login page 59, in order to accelerate logging in to the webstore 57.

In one embodiment, the aforementioned first code contains a login identifier in addition to other data.

The code contained in the identifier can thus contains one or more portions, which have different purposes. One portion of the code can, for example, contain the network address of the ordering page, i.e. a URL. The second portion of the code can, for example, contain a default ordering amount. One of the code's portions can also contain the login data.

According to the embodiment of Figure 5, the ordering system comprises an application to be performed in a mobile station 56, which is arranged to direct the mobile station 56 to read the said remotely readable identifiers 51, 52, 53, 54, 55 and in response to the reading event to direct the browser of the mobile station to go to the web pages 59, 50, 51a...51n shown by the read identifier.

In the embodiment of Figure 5, the remotely readable identifier 51, 52, 53, 54, 55 comprises a code, which is arranged to direct the browser program to a specific page 59, 50, 51a...51n of the webstore, utilizing the network address, and to pre-complete at least one datum on the webpage. According to various embodiments, such a pre-completed at least one datum can comprise, for example, a product code, a login identifier, and/or an ordering amount.

The embodiments of Figure 5 can thus be used in connection with the embodiments of Figures 1 - 4 by implementing the functionalities of the identifiers 51, 52, 53, 54, 55 with the aid of the identifiers 5A, 5B... containing product data shown in Figures 1 - 4 and identifiers 12, 13, 14 containing refill-order information.

The embodiments permit, for example, the user to login to the webstore by reading two remotely readable tags, and to be able to see the order status of a product (whether the product is already ordered, when the product will be delivered) and to enter a new order relating to the product. The default order amount can also be ready, so that the customer only approves the product and amount to be added to the cart. The order can be directly confirmed, or the confirmation may still require a manual event or the reading of a confirmation tag.

Thus, in one embodiment the remotely readable identifier comprises a fifth code, which directs the webstore to confirm the order in the cart.

In one embodiment, login to the webstore takes place by reading a remotely readable identifier which leads to the webstore's login page, in such a way that the username is already entered. If the customer wants to record the password in the browser, login only requires the LOGIN button to be pressed, or some other corresponding operation to be performed. This step can be omitted, if the customer has already logged in to the webstore.

Correspondingly, ordering from the webstore takes place by reading an identifier, which leads to the location of the desired product on the results page of the webstore's product search. Instead of this, it can lead directly to the page, on which a specific product and amount are confirmed for ordering.

In one embodiment, ordering by mobile means through the webstore from a supplier's shelf in the customer's premises allows the supplier to monitor in real time the balance consumption from the storage location in the customer's premises and to bill according to consumption. Through the webstore, the customer also has a real-time view of the balance consumption.

In the following, some embodiments are described, in which NFC identifiers or QR codes are used as identifiers, i.e. as tags.

Embodiment 1:
1) The code of the first identifier to be read contains a URL, which is in the form www.webstore.fi/loginname_XXX. This leads to logging in with the correct login name and a function is automatically selected in the webstore, by means of which the customer can log in.
2) The code of the second identifier to be read contains a URL, which is in the form www.webstore.fi/product_search/productxxxx. This opens a window on the screen, in which there is the selected product and the customer can either enter the order amount they desire or accept the default order amount by pressing the ORDER button. Here, the customer can be shown the order status of the product. Thus the customer sees at once whether the product in question is already coming to the emptying shelf/warehouse unit, or whether they must place an order. The order can go directly to processing without a cart procedure, or to the cart, irrespective of the webstore implementation.

In this embodiment, the customer can read the amount they desire from the identifiers of different products, which are then added to the order. Finally the customer confirms the order, either by reading the confirmation identifier or by confirming in the web service, e.g., by clicking OK. The customer can, of course, add products to the order through a manual search.

Figure 6 shows the method according to one embodiment. According to Figure 6, in step 201 an identifier is read with the aid of a mobile station. In response to the reading, the software application to be performed in the mobile station directs the mobile station's web browser to a URL read from the identifier, i.e. in step 202 a connected is made to a defined webpage. At the same time, at least one datum is pre-entered on the webpage in step 203. This datum to be pre-entered is also obtained or derived from a code contained in the identifier. After this, input is received from the customer through the mobile station's user interface in step 204 and, in response to the input the service requested with the aid of the input is performed in the webstore in step 205.

In one embodiment, the method of Figure 6 is repeated by reading different identifiers during the performance of one order. In one such embodiment, during the first performance the login identifier is read in step 201 and a move is made to the login page in step 202. In step 203, the customer's login identifier is pre-entered on the login page and in step 204 at least one input is received. In one embodiment, the input includes the entering of a password and the pressing of the login button. In a simpler embodiment, only the login button is pressed. In an alternative embodiment, logging in is automatic, so that this step is not performed. Next, the requested service is performed in step 205, i.e. logging in to the webstore takes place.

Next the customer reads their desired number of identifiers. On each reading, the code contained in the identifier is read in step 201 and a move is made to the product-specific webpage corresponding to the product in step 202. At the same time, in step 203, at least one datum, for example, the default-order amount of the product is pre-entered on the basis of the information contained in the code. After this, in step 204, input is received, which can be, for example, confirmation of the pre-entered order amount, or a change in the pre-entered order amount and confirmation after this. In response to the input, the confirmed order is added to the customer's cart in the webstore, i.e. step 205 is performed. This method is repeated for as long as the customer wishes to add products to their order.

After this, the customer can confirm their entire order in the cart, when the order will move forward to order processing. This confirmation too can be performed by reading an identifier made for this purpose. This can be implemented, for example, by performing the method shown in Figure 6.

The method of Figure 6 can be performed, for example in the webstore system shown in Figure 1 and by using the storage systems and their identifiers depicted in Figures 1 - 4.

In one embodiment a method is implemented for receiving an order in a webstore, in which method:
a connection request formed on the basis of reading a remotely-readable identifier is received from the terminal device used by the customer and a connection is opened;
during the opened connection, at least one product datum derived from the code contained in at least one remotely-readable identifier is received from the terminal device;
during the opened connection, at least one default-order amount derived from a code contained in at least one remotely-readable identifier is received from the terminal device;
an order page, derived from a code contained in at least one remotely-readable identifier, through which the said product can be added to the customer's order, is displayed on the customer's terminal device; and
a default-order amount, derived from a code contained in a remotely-readable identifier corresponding to a product is prefilled on the said order page.

The method can be used in connection with the storage systems described above.

In one embodiment, such a storage system comprises at least one such storage space 1A, 1B, ..., which comprises at least two marking depicting an extent of filling, of which the first marking 2A, 2B, ... depicts a larger extent of filling and the second marking 3B, ... depicts a smaller extent of filling. Correspondingly, the system also comprises at least two remotely-readable identifiers for the two markings, so that a smaller refill-order amount is coded in the data contained in the first identifier 12 and a larger refill-order amount is coded in the data contained in the second identifier 13.

In one embodiment, at least one identifier is arranged, by exploiting a network address, to direct the browser program of the terminal device reading the identifier to a specific page 59, 50, 51a...51n of the webstore operating trading services and to pre-fill at least one datum on the network page.

The actual identifiers and markings can be separate or implemented in such a way that the identifier 12, 13 ... itself forms the marking 2G, 3G ... depicting the extent of filling, or is integrated with the marking 2G, 3G, ... depicting the extent of filling.

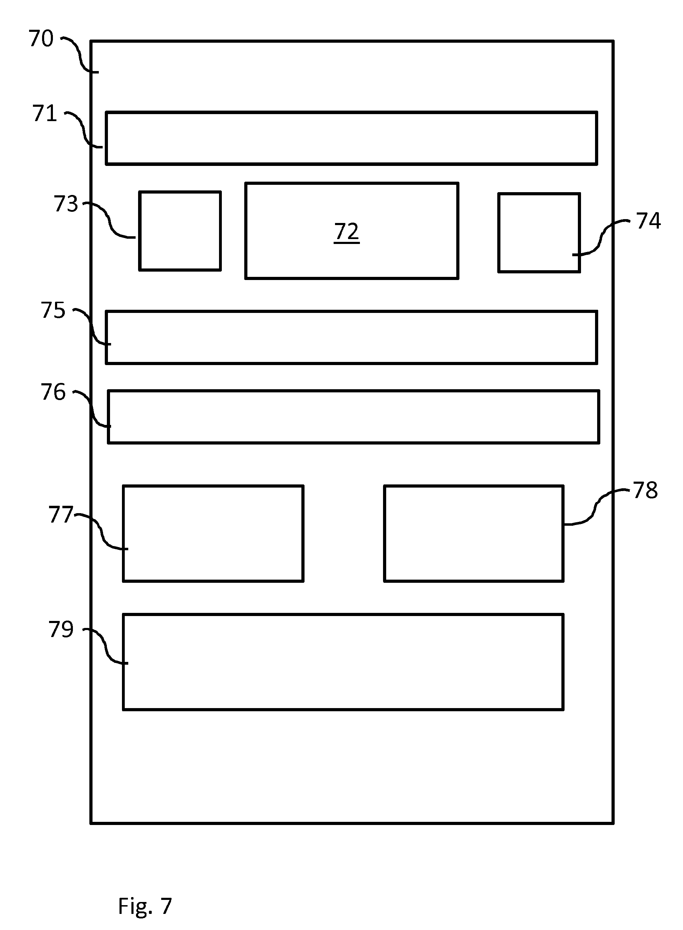

Figure 7 shows schematically a window according to one embodiment, which is shown to the customer on the display of the terminal device when placing an order. The window thus corresponds to the ordering page referred to above. The window contains information boxes, in which data relating to an order are shown, and selection boxes, by selecting which the data of the order can be altered and the order guided. The selection can take place, for example, with the aid of a touchscreen or keyboard. In the embodiment of Figure 7, such information boxes and selection boxes are as follows:
- The product box 71 contains the product name and product number of the product that is the subject of the order.
- In the initial situation, the order-amount box 72 shows the default-order amount. If the order amount is changed due to an instruction obtained from the user, the order-amount box 72 shows the changed order amount thus obtained.
- The order-amount reduction box 73 is a selection box, the selection of which gives a control signal to reduce the order amount, i.e. to reduce the order amount that is shown in the order-amount box 72.
- The order-amount increase box 74 is a selection box, the selection of which gives a control signal to increase the order amount, i.e. to increase the order amount that is shown in the order-amount box 72.
- The order-information box 75 shows information on open orders, retrieved from the webstore's memory, which relate to the relevant product and the relevant storage unit. The order-information box can thus show, for example, that the amount X on this product has already been order for the relevant storage space and that the order will be delivered on the date N.N. Thus, the customer can evaluate the need for an order precisely on the basis of the real situation at the moment. The delivery shown can also be a standard delivery according to a delivery contract.
- In the second order-information box 76 additional information can also be shown, such as information on when the supplier will next deal with the products ordered for the following day. If a specific delivery interval has been agreed between the supplier and the customer, the next contract delivery date can also be shown. In addition, there is information in the box as to whether the supplier is presently dealing with orders that have at that time not yet been delivered. In this box information can also be shown as to when the relevant product was last delivered to the relevant storage unit. The delivery information can be, for example, information as to when the products were sent from the supplier to the place in question, or the time of the actual arrival acknowledgement at the place. The delivery information can also comprise both of these.
- The normal-order box 77 is a selection box, by selecting which the amount shown in the order-amount box 72 of the product itemized in the product box 71 is added to the order as a normal order with the usual delivery conditions.
- The express-order box 78 is a selection box, by selecting which the amount shown in the order-amount box 72 of the product itemized in the product box 71 is added to the order as an express order with the delivery conditions of an express order.
- The save box 79 is a selection box, by selecting which an order that is open is saved and transferred directly to be dealt with by the supplier, without separate approval.

The window shown by Figure 7 is a schematic figure, which is intended to illustrate the functionalities made possible by the embodiments. In different embodiments, the window can also include other selection boxes and information boxes and the embodiments can also be implemented in such a way that some of the boxes shown in Figure 7 are omitted.

In one embodiment, one identifier, i.e. tag, contains data for ordering more than one product with a single operation. In that case, the product information of several products and the data on the default-order amount of the products are coded in the identifier. As in the case of a single product, the information can be coded in the identifier itself or the identifier can contain a code, which directs to a table maintained in the webstore, where this information is maintained.

Such embodiments relating to several products can be exploited in several different ways. In one embodiment, a refill-order identifier is arranged in connection with the storage system, by reading which the terminal device is directed to the ordering page of the webstore and the ordering page is prefilled with a default order corresponding to the capacity of the entire storage system. This property can be neatly used, for example, in connection with the accessory box shown in Figure 4. A refill-order identifier is then attached to the inner lop of the accessory box, with the aid of which a refill can be ordered for an empty accessory box by means of one simple operation. If there is still some product left in the accessory box, the default-order amount can, of course, be reduced in the case of this product. Correspondingly, a group of any products whatever to be ordered can be arranged to form a default order, which can be easily made by reading a corresponding identifier. Such an embodiment can even be implemented in such a way that the code contained in the identifier is attached logically to direct to a table maintained in the webstore and the customer is given the opportunity by means of the user interface to form the default order defined in the table. In this way, the customer can program into the refill order already a smaller or larger default-order amount in the case of specific products.

Generally, the amount assumed in the refill-order amount corresponding to the identifier, i.e. the default-order amount, is derived in an electronic trading service on the basis of code contained in a remotely-readable identifier. The derivation can take place, for example, in such a way that the default-order amount is coded directly into the identifier. The derivation can also take place in such a way that a code, which is converted into the default-order amount in the electronic trading service, is coded into the identifier. The conversion can take place, for example, in such a way that each code corresponds directly to a specific default-order amount, or in such a way that the codes are order-location-specific, i.e. each storage space corresponds to its own code, on the basis of which the default-order amount is derived, for example, on the basis of information in the electronic trading service or in a database connected to it. The order-location-specific code can be, for example, the location data of a compartment or other storage space.

In one embodiment, the codes contained in at least two remotely-readable identifiers each contain their own default-order amount, which is selected on the basis of a marking depicting a corresponding extent of filling.

In another embodiment, the codes contained in at least two remotely-readable identifiers each contain their own individual identifier datum, on the basis of which the default-order amount can be derived individually in the electronic trading service to correspond to each identifier datum.

Further, in one embodiment, at least one identifier, i.e. tag is set to direct to a product listing in the webstore, in which there are also products, for which there is not their own storage space in the storage system, but which are otherwise potentially orderable products.

According to the embodiment, the markings 2A, 2B, ... depicting the extent of filling are visually detectable markings. The markings 2A, 2B, ... can be, for example, coloured lines, protrusions, grooves, roughenings, pimples, studs, stickers, or other corresponding markings, which can be distinguished visibly from the background in the operating situation of the storage system.

According to the embodiment, the markings 2A, 2B, ... depicting the extent of filling can be detected by eye, and a terminal device need not be used to detect them. The person using the system thus detects the markings with his own eyes and using the terminal device to read the remotely-readable identifiers 5A, 5B, ..., 12, 13, 14 corresponding to the markings 2A, 2B, ....

In the followings, embodiments and applications are further described with reference to Figure 4. In the following description, the accessory box shown in Figure 4 is referred to by the name WaBox.

The WaBox can be situated, for example, on a work site, or it can be transported in a van or similar, as it is an easily moveable storage unit. The WaBox contains a visual alarm limit 2L as well as an identifier connected to a product chart 6, 6' (or, in another embodiment, the storage spaces), in which an order code is coded, as has already been described above. The order code allows a customer to place a refill order directly by mobile means. The content of the unit can be easily observed by eye.

The WaBox or similar storage system can also be a smart work-site pack or other storage unit, which assists in ordering the correct amount of refill at the correct point. The WaBox contains visual alarm limits and information as to how much product the refill order should include, in order that the storage unit will be full again. The visual alarm limit is, for example, painted on the storage unit.

The WaBox pack can easily be implemented as a towable equipment pack running on wheels, which contains HVAC accessories relating to a specific installation stage. The contents of the pack can be planned precisely for the needs of the customer and it can have a series number, on the basis of which the main location of the pack (e.g., a vehicle's registration number or the work site's address) will be known to the customer and the goods supplier. In the lid of the pack there can be a chart, in which the contents of the pack are shown by compartment. For each compartment there is a marking in the chart telling what product it contains, what amount of the product is in the compartment when it is full, and what the order amount is up to the alarm limit. Under the chart, there can be an identifier, such as an NFC tag, behind each product or compartment depiction. Next to the chart can be a login tag to the ordering portal.

Each compartment can have an alarm limit marking with a colour code. As the products diminish and the colour marking the alarm limit becomes visible, the ordering point is reached. The fitter has with him a telephone, with which he first reads the login tag and then uses the telephone to touch in the product depiction the product it is wished to order. He is guided to the product's ordering site, where the default amount may be already entered. The fitter need only confirm the order for the product or change the order amount. In the vehicle, there can also be a separate order chart from the WaBoX, which has the same functionality as the chart in the WaBoX. The chart can be useful if the person placing the order wishes to combine at one time orders involving many kinds of pack.

Generally, there can be either a smart product chart with product information of the storage unit, which contains the components (e.g., an NFC tag or QR code) required for mobile ordering, or, if it is better in terms of the size and operability of the storage unit, the components needed to place an order and the product information can be found immediately at the location of the product. When the storage system is used in connection with a suitably programmed webstore, the smart product chart containing the webstore can include a memory of previous orders, so that it is impossible to order the same product twice by mistake, because the product chart tells the person placing order that the product has recently been ordered.

The WaBox provides an easy refill-order solution for a mobile or changing storage location. As ordering takes place immediately and rapidly when a deficiency appears, it reduces waste time on the work site, unnecessary trips to, e.g., the store during work, and at the same time the office time needed for placing order is reduced. A purchasing contract can be made for the products stored in the storage system, thanks to which the products are always ordered from the right place and at the right price.

The visual alarm limit directs a refill order to be placed already before the product has run out.

Despite the default-order amount, the customer has nevertheless an opportunity to decide themselves on the order and order amount, even though the alarm limit and default-order-amount information are available. In one embodiment, the smart product chart or product marking tell directly of open orders involving the product, which clarifies the order process and reduces unnecessary orders. Depending on the service, the customer can either collect their ordered refill from the supplier or the supplier can deliver the refill to an agreed address.

As has already been seen above, the storage system can also be a more fixed solution, such as a work-site shelf, or a shelf in a van. On the shelf can be boxes, in each of which is an alarm limit marked with a colour code. In each box there can be a label, with a product description, the product amount of a full box, and the refill amount needed if an order is placed when the product is in the alarm-limit stage. Under this label can also be a remotely-readable identifier, i.e. a tag, by which the order can be placed immediately using a mobile station. Besides the shelf, there can also be a separate order chart in the work-site container, which has the same functionality as the chart on the shelf. The chart can be useful if orders are wished to be placed at the same time, e.g., during a break.

With the aid of the embodiments, a quick and easy way can be provided to order from a webstore using a mobile device, especially when the question is of repeatedly ordering the same products and, for instance, deliveries and billing have been agreed beforehand between the customer and supplier. Known webstores are generally constructed to be easily operated using a computer, but the browsing and retrieval of long product lists using a mobile phone is still laborious and unpleasant. Ordering one product and checking the status of the order requires many different moves inside the webstore, which can be slow in a mobile network. With the aid of the embodiments this problem can be significantly alleviated.

With the aid of the embodiments, it is possible, for example, to implement very practically the refill ordering of the same, specific products, for example, the placing of refill orders for temporary work-site stores, the refilling of the contents of an installation pack, or the refill ordering of products for the shelves of a store.

With the aid of the embodiments, it is also possible to accelerate cash-and-carry sales. One way to do this is a smart catalogue, from which the customer can enter their own order by reading the identifiers contained in the smart catalogue. The warehouse then collects the order and brings it to the waiting customer. The embodiments can also be used in self-service collection warehouse stores. In the case of self-service collection, the salesperson's tasks remain only to deliver and bill for a webstore order that has been placed. A third example is a supplier's shelf in the customer's premises, the storage-location balance consumption of which the supplier monitors in real time through the webstore. In this example, the customer makes an easy webstore order with the aid of the embodiments by collecting products from the supplier's shelf. Collection made with the aid of a mobile device does not require any investment by the customer in warehouse-management software, nor a separate manually made notification of goods used/resold from the shelf. Because the balance-consumption information travels through the webstore, the customer can monitor their own consumption in real time.

On the basis of the examples presented above, it is obvious that within the framework of the invention numerous solutions differing from the embodiments described above can be implemented. Thus, the invention is not intended to be restricted to concern only the examples presented above, but the patent protection should be examined to the full scope of the accompanying Claims.

## Claims

1. A storage system comprising storage spaces (1A, 1B, ...) for storing various products and markings (2A, 2B, ...) in the storage spaces for depicting the extent of filling,characterized inthat:
the storage system comprises identifiers (5A, 5B, ..., 12, 13, 14), remotely readable with the aid of a terminal device, the identifiers containing data for placing refill orders from an electronic trading service with the aid of the terminal device, and
at least some of the remotely-readable identifiers are each logically connected to one marking depicting the extent of filling, such that the default-order amount corresponding to the marking depicting the extent of filling is derivable in the electronic trading service on the basis of code contained in the remotely-readable identifier.

2. The storage system according to Claim 1, **characterized in that** the data for placing a refill order include individuation information on the product.

3. The storage system according to Claim 1 or 2, **characterized in that** it comprises
at least one such storage space (1A, 1B, ...) that comprises at least two markings depicting the extent of filling, of which the first marking (2A, 2B, ...) depicts a larger extent of filling and the second marking (3B, ...) depicts a smaller extent of filling, and
correspondingly, at least two remotely-readable identifiers for said at least two markings, such that a code, from which a smaller default-order amount is derivable, is included in the data contained in the first identifier (12) and a code, from which a larger default-order amount is derivable, is included in the data contained in the second identifier (13).

4. The storage system according to any of Claims 1 - 3, **characterized in that** it comprises remotely-readable identifiers (5A, 5B, ...) for identifying each product being stored, such that individuating information for a corresponding product is coded in the data contained in the identifier.

5. The storage system according to any of Claims 1 - 4, **characterized in that** is comprises at least one remotely-readable identifier (12, 2G, 13, 3G, ...), in the data contained in which is coded the individuation information of a corresponding product and a refill-order amount selected on the basis of the corresponding extent of filling.

6. The storage system according to any of Claims 1 - 5, **characterized in that** the codes contained in at least two remotely-readable identifiers each contain their own default-order amount, which is selected on the basis of a marking depicting a corresponding extent of filling.

7. The storage system according to any of Claims 1 - 6, **characterized in that** the codes contained in at least two remotely-readable identifiers each contain their own individual identifier datum, on the basis of which the default-order amount is derivable in the electronic trading service individually corresponding to each identifier datum.

8. The storage system according to any of Claims 1 - 7, **characterized in that** it comprises at least one remotely-readable identifier (12, 13, ...), which itself forms a marking (2G, 3G, ...) depicting the extent of filling or which is integrated with a marking (2G, 3G, ...) depicting the extent of filling.

9. The storage system according to any of Claims 1 - 8, **characterized in that** it comprises at least one remotely-readable identifier (12, 13, ...), which is situated on a separate product card (6).

10. The storage system according to any of Claims 1 - 9, **characterized in that** at least one identifier is arranged, utilizing a network address, to direct the browser program of the terminal device reading the identifier to a specific page (59, 50, 51a ...51n) of the webstore operating the trading service and to pre-fill at least one datum on the webpage.

11. The storage system according to any of Claims 1 - 10, **characterized in that** the remotely-readable identifier is an NFC identifier or a QR code.

12. The storage system according to any of Claims 1 - 11, **characterized in that** the markings (2A, 2B, ...) depicting the extent of filling are markings that can be detected by eye.

13. A method for receiving an order in a webstore, **characterized in that** the method comprises:
receiving, from a terminal device used by a customer, a connection request formed on the basis of reading a remotely-readable identifier and opening a connection;
when opening the connection or during the opened connection, receiving, from the terminal device, at least one code read from at least one remotely-readable identifier;
deriving, in the webstore system, product information and a corresponding default-order amount for preliminary preparation of an order on the basis of the received at least one code;
preliminarily preparing the order such that the order includes the derived product information and the corresponding default-order amount; and
displaying, for the customer's terminal device, an order page derived from the code contained in at least one remotely-readable identifier, the preliminarily prepared order being shown on the order page and the preliminarily prepared order being addable to the customer's order through said order page.

14. A method for receiving an order in a webstore, **characterized in that**, in the method comprises:
receiving, from a terminal device used by a customer, a connection request formed on the basis of reading a remotely-readable identifier, and opening a connection;
when opening the connection or during the opened connection, receiving, from the terminal device, at least one product data derived from code contained in at least one remotely-readable identifier;
when opening the connection or during the opened connection, receiving, from the terminal device, at least one default-order amount derived from code contained in at least one remotely-readable identifier;
displaying on the customer's terminal device an order page, through which the said product can be added to the customer's order, the order page derived from code contained in at least one remotely-readable identifier; and
pre-filling the default-order amount on said order page, the default-order amount derived from the code contained in the remotely-readable identifier corresponding to the product.

15. The method according to Claim 13 or 14, in which individuation information on the person placing the order, the billing information, and/or the delivery address of the order are selected automatically on the basis of code contained in an identifier.
